# EUROPEAN PATENT APPLICATION

(11) **EP 3 608 927 A1**
(43) Date of publication of application: **12.02.2020**
(21) Application number: 19189349.4
(22) Date of filing: 31.07.2019
(51) Int. Cl.: H01F 7/121, F16K 31/06, H01F 7/16, H01H 51/29, H01F 7/08

(54) **ELECTROMECHANICAL SOLENOID WITH ARMATURE HAVING CROSS-SECTIONAL SHAPE THAT RESTRICTS ARMATURE ROTATION**

(30) Priority: 06.08.2018 US 201816055501
(71) Applicant: Hamilton Sundstrand Corporation, Charlotte, NC 28217-4578 (US)
(72) Inventor: BUTCKA, William W., Colchester, CT Connecticut 06415 (US)
(74) Representative: Dehns

(57) **Abstract**

An electromechanical solenoid includes a wall (18) defining an internal cavity (20), and an armature (22) that is situated within the internal cavity and extends along a longitudinal axis. A winding (24) is disposed radially outward of the wall and at least partially surrounds the armature. The winding is configured to provide an electromagnetic field when the winding is energized that moves the armature along the longitudinal axis within the cavity. A cross section of the armature perpendicular to the longitudinal axis has a shape that restricts rotation of the armature about the longitudinal axis within the cavity.

## Description

### BACKGROUND

This application relates to electromechanical solenoids, and more particular to an electromechanical solenoid with an armature having a cross-sectional shape that restricts rotation of the armature.

An electromechanical solenoid includes a coil wound around a core that then surrounds an armature. The armature is moveable along a longitudinal axis to control a load, such as a valve or switch. When the coil is energized, a magnetic field is provided that causes linear motion of the armature along the longitudinal axis. In some operating environments, vibration can cause the armature to rotate about the longitudinal axis, undesirably causing wear resulting in debris and premature degradation of the armature.

### SUMMARY

An electromechanical solenoid includes a wall defining an internal cavity, and an armature that is situated within the internal cavity and extends along a longitudinal axis. A winding is disposed radially outward of the wall and at least partially surrounds the armature. The winding is configured to provide an electromagnetic field when the winding is energized that moves the armature along the longitudinal axis within the cavity. A cross section of the armature perpendicular to the longitudinal axis has a shape that restricts rotation of the armature about the longitudinal axis within the cavity.

A solenoid valve for controlling flow of a of a gas turbine engine fluid includes an inlet, an outlet, and a wall defining an internal cavity. An armature is situated within the internal cavity and is movable along a longitudinal axis between first and second positions. One of the first and second positions provides a greater degree of fluid communication between the inlet and the outlet than the other of the first and second positions. A winding is disposed radially outward of the wall and at least partially surrounds the armature. The winding is configured to provide an electromagnetic field when the winding is energized that moves the armature along the longitudinal axis between the first and second positions. A cross section of the armature perpendicular to the longitudinal axis has a shape that restricts rotation of the armature about the longitudinal axis within the cavity.

The embodiments, examples, and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### BRIEF DESCRIPTION OF THE DRAWINGS

Figure 1A is a schematic view of an example solenoid valve with an armature in a first position.
Figure 1B is a schematic view of the solenoid valve of Figure 1A with the armature in a second position.
Figure 2 is a schematic view of an example cross-section of the solenoid valve of Figure 1A taken along line B-B of Figure 1A.
Figure 3 is a schematic view of a cross-section of an example armature taken in a plane perpendicular to a central longitudinal axis of Figures 1A-B.
Figure 4 is a schematic view of an example solenoid switch.

### DETAILED DESCRIPTION

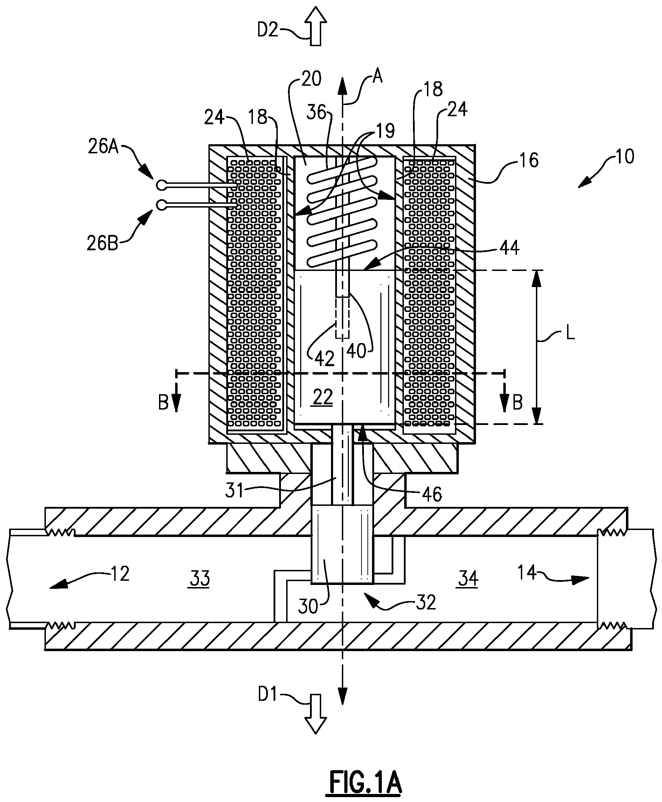

Figure 1A schematically illustrates an example electromechanical solenoid which is a solenoid valve 10. The solenoid valve 10 includes a housing 16 having a fluid inlet 12 and a fluid outlet 14. The housing 16 includes an inner wall 18 that has an inner surface 19 and defines an internal cavity 20.

An armature 22 is situated within the internal cavity 20 and is movable along a longitudinal axis A within the internal cavity 20 to control a flow of fluid between the inlet 12 and outlet 14. A winding 24 is disposed radially outward of the inner wall 18, and at least partially surrounds the inner wall 18 and the armature 22. The winding 24 has electrical terminals 26A-B. When the winding 24 is energized via the electric terminals 26A-B, the winding 24 provides an electromagnetic field that moves the armature 22 along the longitudinal axis A within the cavity 20 between a first position and a second position.

Figure 1A schematically shows the armature 22 in the first position, which is a closed position. A plunger 30 connects to the armature 22 through a shaft 31. In the first position, the plunger 30 prevents fluid communication between the inlet 12 and outlet 14 by blocking an opening 32 between an inlet chamber 33 and an outlet chamber 34. A spring 36 provides a bias force that biases the armature 22 in a first direction D1 towards the first position.

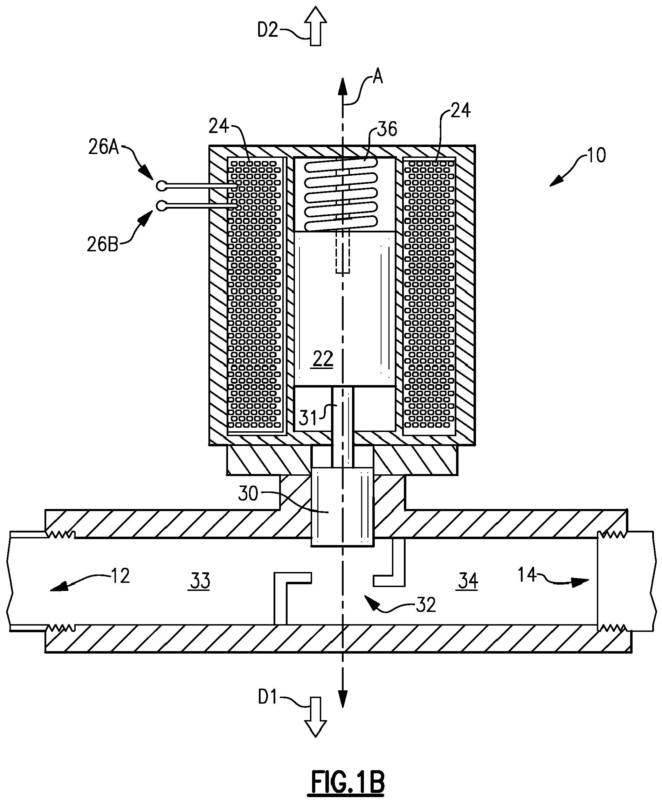

Figure 1B schematically shows the armature 22 in the second position, which is an open position. When the winding 24 is energized, the electromagnetic field of the winding 24 provides a force in a direction D2 that is opposite the first direction D1. The force of the electromagnetic field resists the bias force of the spring 36, and moves the armature 22 to the second position, which compresses the spring 36. In the second position, the plunger 30 no longer blocks the opening 32, and the unblocked opening 32 provides for fluid communication between the inlet chamber 33 and outlet chamber 34. When the winding 24 is no longer energized, the magnetic field diminishes and the armature 22 returns to the first position of Figure 1A. The winding 24 at least partially surrounds the armature 22 in each of the first and second positions.

Optionally, a guide shaft 40 may be included that extends from the housing 16 into a longitudinal passage 42 in the armature 22. The guide shaft 40 guides movement of the armature 22 along the longitudinal axis A within the internal cavity 20.

The armature 22 has a cross-sectional shape taken perpendicular to the longitudinal axis A that restricts rotation of the armature about the longitudinal axis within the internal cavity 20 by abutting the inner surface 19 of the inner wall 18. The armature 222 and inner surface 219 have generally the same cross-sectional shape, and can abut each other to restrict rotation of the armature 22.

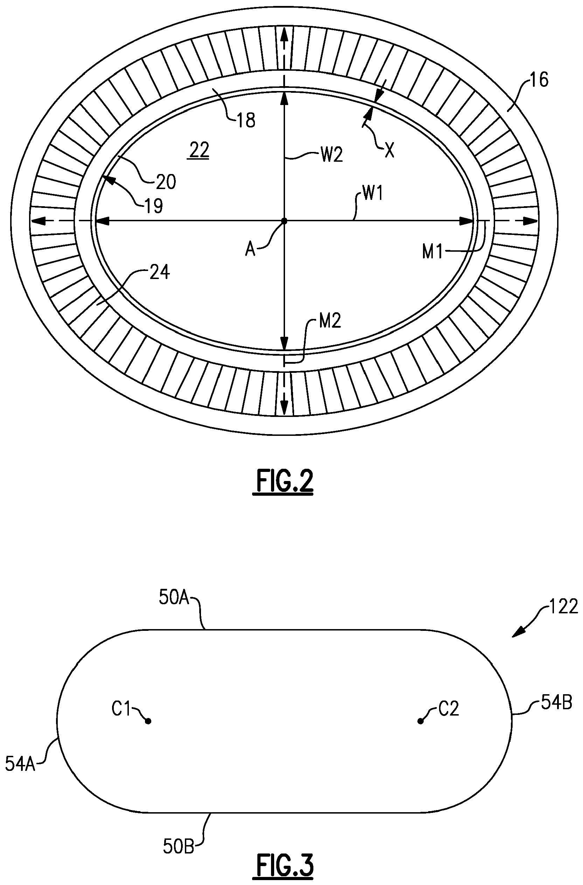

Figure 2 is a schematic view of a cross-section of the solenoid valve 10 taken perpendicular to the longitudinal axis A along line B-B of Figure 1A. In the example of Figure 2, the cross-sectional shape of the armature 22 is elliptical, having a first width W1 along a major elliptical axis M1 and a second width W2 along a minor elliptical axis M2 that is different from the first width W1. The first width W1 is greater than the second width W2.

A plurality of example relatively values for W1 and W2 re provided in Table 1 below. No units are provided, because the values are intended to indicate a relative size of W1 and W2 In relation to one another. Any of the aspect ratio ranges could be used for the armature 22.

**Table 1**

| **W1** | **W2 Range** | **Aspect Ratio Range** |
|---|---|---|
| 1.50 | 0.90 - 1.49 | 0.60 - 0.99 |
| 1.25 | 1.00 - 1.20 | 0.80 - 0.96 |
| 1.00 | 0.50 - 0.95 | 0.50 - 0.95 |
| 0.90 | 0.50 - 0.85 | 0.56 - 0.94 |
| 0.80 | 0.40 - 0.75 | 0.50 - 0.94 |
| 0.70 | 0.30 - 0.60 | 0.43 - 0.86 |
| 0.60 | 0.30 - 0.50 | 0.50 - 0.83 |
| 0.50 | 0.20 - 0.40 | 0.40 - 0.80 |
| 0.40 | 0.20 - 0.30 | 0.50 - 0.75 |
| 0.30 | 0.10 - 020 | 0.33 - 0.67 |
| 0.20 | 0.05 - 0.10 | 0.25 - 0.50 |

As shown in Figure 2, the inner surface 19 also has an elliptical shape that is generally the same as the cross-sectional shape of the armature 22. During conditions under which armature rotation about the longitudinal axis A would otherwise occur, the armature 22 abuts the inner surface 19 to restrict such rotation. In one non-limiting example, a distance X between the armature 22 and the inner surface 19 is on the order of 0.0254 - 0.0762 mm (0.001 - 0.003 inches). Of course, other distances could be used and may be application design dependent.

Referring again to Figure 1A, the armature 22 has opposing first and second ends 44, 46, and has a length L between the ends 44, 46. In one example, the armature 22 has a same cross-sectional shape taken perpendicular to the longitudinal axis A for a majority of its length L. In a further example, the armature 22 has a same cross-sectional shape taken perpendicular to the longitudinal axis A for its entire length L.

In one example, a maximum length of the armature 22 between the opposing ends 44, 46 is greater than a maximum width of the armature taken perpendicular to the longitudinal axis (e.g., width W1 in the example of Figure 2).

Although the example solenoid valve 10 depicted in Figures 1A-B is a two-way solenoid valve, it is understood that the armature features discussed herein could similarly applied to other valves, such as three-way and four-way solenoid valves.

In this disclosure, like reference numerals designate like elements where appropriate and reference numerals with the addition of one-hundred or multiples thereof designate modified elements that are understood to incorporate the same features and benefits of the corresponding elements.

Figure 3 is a schematic view of a cross-section of another example armature 122 taken perpendicular to the longitudinal axis A. The armature 122 has opposing first and second sidewalls 50A-B that are generally parallel to each other, and opposing third and fourth sidewalls 54A-B that are rounded. Rounded sidewall 54A has a center of curvature C1, and rounded sidewall 54B has a center of curvature C2. The centers of curvature C1, C2 are between the rounded sidewalls 54A-B. The cross-sectional shape of armature 122 as shown in Figure 2 also restricts rotation of the armature 122 about the longitudinal axis A when situated in a cavity having generally the same cross-sectional shape as the armature 122.

The solenoid valve 10 could be used as a bleed valve in an engine, such as a gas turbine engine for an aircraft or helicopter for example, for controlling a flow of fluid (e.g., cooling air within the gas turbine engine) within the engine. In one example, the bleed valve is used in the high pressure compressor of a gas turbine engine. In environments such as those of gas turbine engines, a bleed valve may be subjected to high frequency vibration. Such vibration can excite prior art armatures and cause them to rotate, and thereby cause premature wear of an armature. Unlike such prior art armatures, which had circular cross sections that freely permitted armature rotation, the armatures 22, 122 have respective cross-sectional shapes that restrict rotation of the armature 22 which prevents such wear.

Although two specific cross-sectional shapes are disclosed in Figures 2-3, it is understood that these are non-limiting examples, and that armatures having other cross-sectional shapes could be used.

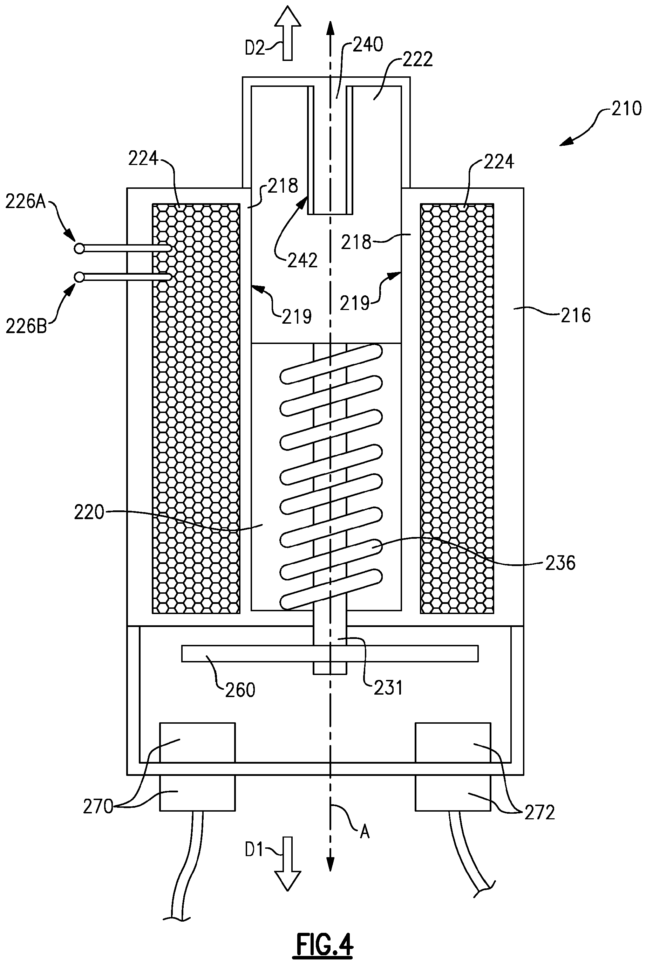

Figure 4 is a schematic view of an example electromechanical solenoid which is a solenoid switch 210. Like the solenoid valve 10, the solenoid switch 210 includes a housing 216 that includes an inner wall 218 that has an inner surface 219 and defines an internal cavity 220.

An armature 222 is situated within the internal cavity 220 and is movable along a longitudinal axis A within the internal cavity 220. A shaft 231 connects the armature 222 to an electrically conductive plate 260.

The armature 222 is movable along longitudinal axis A to connect and disconnect electric contacts 270, 272 from each other. In particular, the armature 222 is movable between a first position shown in Figure 4 in which the electrically conductive plate 260 is spaced apart from electrical contacts 270, 272 and the electrical contacts 270, 272 are electrically disconnected from each other to a second position (not shown) in which the armature moves in direction D1, and causes the electrically conductive plate 260 to contact and electrically connect each of the electrical contacts 270, 272.

The armature 222 has a cross-sectional shape taken perpendicular to the longitudinal axis A that restricts rotation of the armature 222 about the longitudinal axis within the internal cavity 220 by abutting inner surface 219 of the inner wall 218. The armature 222 and inner surface 219 have generally the same cross-sectional shape, and can abut each other to restrict rotation of the armature 222. The armature 222 can use the cross-sectional shapes of Figures 2-3, or another cross-sectional shape, that restricts rotation of the armature 222.

A spring 236 provides a bias force that biases the armature 222 in direction D2 towards the first position. When the winding 224 is energized, the electromagnetic field of the winding 224 provides a force in a direction D1 that is opposite D2. The force of the electromagnetic field resists the bias force, and moves the armature 222 to the second position (not shown), which compresses the spring 36. When the winding 224 is no longer energized, the magnetic field diminishes and the armature 224 returns to the first position of Figure 4.

Optionally, a guide shaft 240 may be included that extends from the housing 216 and into a longitudinal passage 242 in the armature 222. The guide shaft 240 guides movement of the armature 222 along the longitudinal axis A within the internal cavity 220.

Although example embodiments have been disclosed, a worker of ordinary skill in this art would recognize that certain modifications would come within the scope of the invention as defined by the claims. For that reason, the following claims should be studied to determine the scope and content of this disclosure.

## Claims

1. An electromechanical solenoid comprising:
a wall (18) defining an internal cavity (20);
an armature (22) situated within the internal cavity and extending along a longitudinal axis; and
a winding (24) disposed radially outward of the wall and at least partially surrounding the armature, the winding configured to provide an electromagnetic field when the winding is energized that moves the armature along the longitudinal axis within the cavity;
a cross section of the armature perpendicular to the longitudinal axis having a shape that restricts rotation of the armature about the longitudinal axis within the cavity.

2. The electromechanical solenoid of claim 1 comprising:
a spring (36) that provides a bias force that biases the armature in a first direction along the longitudinal axis and maintains the armature in a first position when the winding is non-energized;
wherein when the winding is energized, the electromagnetic field provides a force that resists the bias force and moves the armature along the longitudinal axis in a second direction opposite to the first direction to a second position.

3. The electromechanical solenoid of claim 2, wherein the winding surrounds at least partially surrounds the armature in each of the first and second positions.

4. The electromechanical solenoid of claim 2, wherein the wall is part of a valve housing (16) having an inlet (12) and an outlet (14), and wherein one of the first and second positions provides a greater degree of fluid communication between the inlet and the outlet than the other of the first and second positions.

5. The electromechanical solenoid of claim 4, wherein the electromechanical solenoid is part of a bleed valve of a gas turbine engine.

6. The electromechanical solenoid of claim 2, comprising:
first and second switch terminals (26A, B); and
an electrically conductive member (260) mounted to the armature;
wherein in one of the first and second positions the electrically conductive member contacts and electrically connects the first and second switch terminals, and in the other of the first and second positions the electrically conductive member is spaced apart from and electrically disconnects the first and second switch terminals.

7. The electromechanical solenoid of any preceding claim, comprising:
a housing (16) within which the armature and winding are disposed; and
a guide shaft (31) extending from the housing into a longitudinal passage in the armature, the guide shaft guiding movement of the armature along the longitudinal axis.

8. A solenoid valve for controlling flow of a fluid of a gas turbine engine, comprising:
an inlet (12);
an outlet (14);
a wall (18) defining an internal cavity (20);
an armature (22) situated within the internal cavity and movable along a longitudinal axis between first and second positions, wherein one of the first and second positions provides a greater degree of fluid communication between the inlet and the outlet than the other of the first and second positions; and
a winding (24) disposed radially outward of the wall and at least partially surrounding the armature, the winding configured to provide an electromagnetic field when the winding is energized that moves the armature along the longitudinal axis between the first and second positions;
a cross section of the armature perpendicular to the longitudinal axis having a shape that restricts rotation of the armature about the longitudinal axis within the cavity.

9. The solenoid of any of claims 1 to 7 or the solenoid valve of claim 8, wherein the armature has opposing first and second ends, a length of the armature along the longitudinal axis between the opposing first and second ends parallel to the longitudinal axis being greater than a width of the armature perpendicular to the longitudinal axis.

10. The solenoid of claim 1 or any claim dependent thereon or the solenoid valve of claim 8 or 9, wherein the shape is at least partially elliptical.

11. The solenoid or the solenoid valve of claim 10, wherein the shape is elliptical and has a first width along a major elliptical axis and a second width along a minor elliptical axis that is different from the first width.

12. The electromechanical solenoid or the solenoid valve of claim 11, wherein a ratio of the second width to the first width is 0.60 - 0.99.

13. The electromechanical solenoid of claim 1 or any claim dependent thereon, or the solenoid valve of claim 8, 9 or 10, wherein the armature includes:
opposing first and second sidewalls (50A, B) that are generally parallel to each other; and
opposing third and fourth sidewalls (54A, B) that are rounded.

14. The electromechanical solenoid or the solenoid valve of claim 13, wherein the third and fourth sidewalls each have a respective center of curvature that is between the third and fourth sidewalls.
